# EUROPEAN PATENT SPECIFICATION

(11) **EP 3 187 750 B1**
(45) Date of publication and mention of the grant of the patent: **21.11.2018**
(21) Application number: 16020520.9
(22) Date of filing: 29.12.2016
(51) Int. Cl.: F16G 5/16

(54) **DRIVE BELT FOR A CONTINUOUSLY VARIABLE TRANSMISSION COMPRISING TWO TYPES OF TRANSVERSE MEMBERS OF MUTUALLY DIFFERENT WIDTHS**
ANTRIEBSRIEMEN FÜR EIN STUFENLOSES GETRIEBE MIT ZWEI ARTEN VON QUERELEMENTEN MIT VONEINANDER UNTERSCHIEDLICHER BREITE
COURROIE D'ENTRAÎNEMENT POUR UNE TRANSMISSION VARIABLE CONTINUE COMPRENANT DEUX TYPES D'ÉLÉMENTS TRANSVERSAUX DE LARGEURS DIFFÉRENTES

(30) Priority: 30.12.2015 NL 1041656
(43) Date of publication of application: 05.07.2017
(73) Proprietor: Robert Bosch GmbH, 70442 Stuttgart (DE)
(72) Inventor: VAN DER Sluis, Francis Maria Antonius, 5271HP Sint-Michielsgestel (NL); Yildiz, Semih, 5000AM Tilburg (NL)
(74) Representative: Plevier, Gabriel Anton Johan Maria

(56) References cited:
- WO-A1-2012/089340
- WO-A1-2013/002632
- WO-A1-2013/098653
- JP-U- H 037 553
- JP-U- S62 196 949

## Description

The present invention relates to a drive belt for a continuously variable transmission, which is in particular destined to be arranged around two pulleys of the transmission and which comprises a plurality of discrete transverse elements or members for contacting the transmission pulleys, as well as two endless carriers for carrying and supporting the transverse members. The present type of drive belt is also known as a push belt. The endless carriers of the drive belt are at least partly inserted in respective recesses provided in the transverse members, which recesses open towards a respective lateral or a>xial side of the transverse members, i.e. of the drive belt. Each endless carrier is typically composed of a plurality of mutually nested, continuous flexible metal bands and is also known as a ring set.

The transverse members of the drive belt are slidingly arranged along the circumference of the endless carrier or carriers in a virtually continuous row, such that these members are able to transmit forces which are related to a movement of the drive belt. The transverse members have two main body surfaces which, at least partly, extend substantially parallel with respect to each other and which are separated from each other over the (local) thickness of the transverse member. The transverse members are relatively thin, such that a several hundred thereof are present in the drive belt, allowing the belt to curve along its circumference by the mutual relative rotation of subsequent transverse members. The transverse members are intended for frictionally contacting the transmission pulleys by being clamped width-wise between two conical sheaves of such pulleys. The transverse members arrive in such friction contact through predominantly axially, i.e. width-wise, oriented side faces thereof, which side faces are corrugated to accommodate transmission oil that is applied in the transmission to lubricate the friction contact.

The friction contact between the transverse members and the pulley sheaves allows a force to be transmitted there between, such that the drive belt can transfer a drive torque and rotational movement from one transmission pulley to the other. Such transfer mechanical power by friction is inevitably associated with energy loss due to elastic deformation of parts in the said friction contact and/or because heat is generated therein. In this latter respect, it is suggested in the Dutch patent application No. 1038910 to apply both wide, i.e. pulley sheave contacting, and narrow, i.e. noncontacting, transverse members in one drive belt. As a result only a part of the plurality of transverse members of the drive belt will actually be clamped between the pulley sheaves and the said energy loss is reduced. Hence, the efficiency of the torque transmission by this latter drive belt design is improved relative to the known drive belt with transverse members of equal width.

In relation to the above drive belt design, it has already been recognized in the art that NL-A-1038910 opens up several possibilities for advantageous design changes of the transverse members of different axial dimension or width, mainly with the aim of reducing the manufacturing cost of the drive belt as whole. For example, the Dutch patent application No. patent 1039276 mentions several embodiments of the transverse member within the context of NL-A-1038910.

WO 2012/089340 A1 discloses a drive belt according to the preamble of claim 1. JP H03-7553 U discloses a drive belt according to the preamble of claim 2.

The present disclosure concerns a further improvement with the above known technical concept, in particular in terms of a further efficiency improvement and cost reduction. According to the present disclosure, the narrow, non-pulley contacting transverse members are reduced to separator plates that extend in width direction either only or at least predominantly in between the endless carriers. Thus, at the location of the separator plates that represent the narrow, non-pulley contacting transverse members of the drive belt, the endless carriers are not or only partly constraint in radial outward direction and in radial inward direction. As a result, not only the total mass of the drive belt is substantially reduced, but also the friction losses between the transverse elements and the endless carriers is reduced considerably, since such friction only occurs at the wider, pulley contacting transverse members and not at the separator plates.

In the following, two possible detailed embodiments of the transverse member according to the present disclosure will be discussed in more detail with reference to drawing figures.
Figure 1 provides a schematic perspective view of the continuously variable transmission with a drive belt running over two pulleys.
Figure 2 is a schematic cross-section illustration of a part of the known drive belt, which includes two sets of a number of flexible rings, as well as a plurality of transverse members.
Figure 3 is a top elevation of the known drive belt highlighting a design feature thereof.
Figure 4 provides a schematic cross-section of a first embodiment of the drive belt according to the present disclosure.
Figure 5 provides a front view and a side view of a separator plate of the drive belt of figure 4.
Figure 6 provides a schematic cross-section of a second embodiment of the drive belt according to the present disclosure.
Figure 7 provides a front view of a separator plate of the drive belt of figure 6.

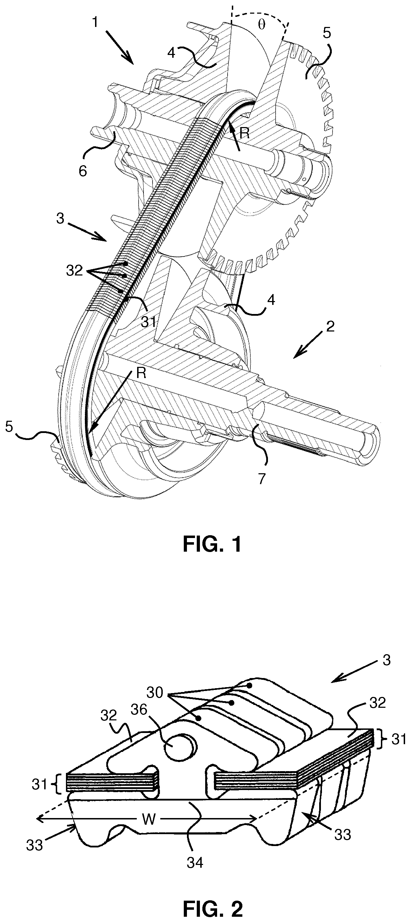

The schematic illustration of a continuously variable transmission (CVT) in Figure 1 shows a drive belt 3 which is wrapped around two pulleys 1 and 2 and which includes two separate endless carriers 31, as well as a plurality of transverse members 30 that are mounted on and arranged along the circumference of these carriers 31 in an essentially contiguous row. When it is clamped between the two conical pulley sheaves 4, 5 of the pulleys 1, 2, the drive belt 3 is able to transmit a torque and an accompanying rotational movement between these pulleys 1, 2 to the other 2, 1. At the same time, the running radii R of the drive belt 3 between the sheaves 4, 5 of the respective pulleys 1, 2 determine the (speed) ratio of the CVT, i.e. the ratio between the rotational speeds of the respective pulleys 1, 2. This CVT and its principal operation are known per se.

An example of the known drive belt 3 is shown in more detail figure 2 in a section of three transverse members 30 thereof. In this figure 2 it is shown that the endless carriers 31 are each made up of a set of mutually nested, flat and flexible rings 32. The transverse members 30 of the drive belt 3 are arranged in mutual succession along the circumference of the carriers 31, in such manner that they can slide relative to and in the circumference direction of the carriers 31. The transverse members 30 take-up a clamping force exerted between the discs 4, 5 of each pulley 1, 2 via pulley contact faces 33 that are provided on either lateral side thereof. These pulley contact faces 33 are mutually diverging in radial outward direction to essentially match the V-angle θ defined between the conically-shaped pulley discs 4, 5 of each pulley 1, 2. A so-called rocking edge 34 represents the transition between a radially outer part of the transverse member 30 of constant thickness and a tapered radial inner part thereof. This shape and rocking edge 34 of the transverse members 30 is what allows the drive belt 3 to follow a smoothly curved trajectory. A stud 36 extends from a main body surface of the transverse member 30 in circumference direction into a hole in the opposite main body surface of an adjacent transverse member 30 to mutually align adjacent transverse members 30 in the drive belt 3.

Hereinafter, the term "width W" is used in relation to the transverse members 30 of the drive belt 3 to indicate the largest dimension thereof in the axial direction of the drive belt, i.e. perpendicular to the longitudinal, i.e. circumference and radial directions thereof.

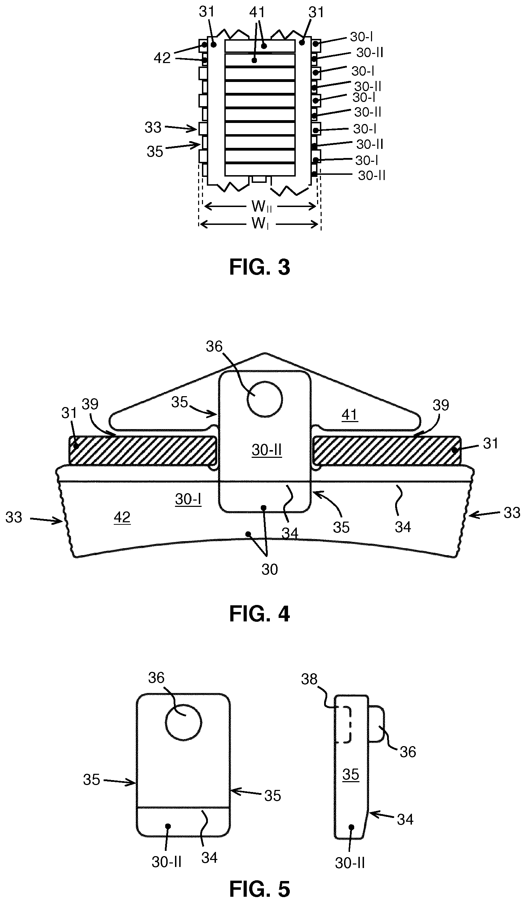

In the embodiment thereof of figure 2, all transverse members 30 of the drive belt 3 are provided with essentially the same width W dimension. However, as is illustrated in figure 3 in a schematic top, i.e. radially inwardly oriented view of the drive belt 3, it is also known to include both wider transverse members 30-I with a larger width W_{I} and narrower transverse members 30-II with a smaller width W_{II} therein. Only the wider transverse members 30-1 of the drive belt 3 take-up the pulley clamping forces and thus frictionally engage the sheaves 4, 5 of the pulleys 1, 2 through their respective pulley contact faces 33. The corresponding surfaces at either lateral side of the narrower transverse members 30-II that do not arrive in friction contact with the pulleys 1, 2 are simply referred to as the side faces 35 thereof. With this latter design of the drive belt 3 the efficiency of the power transmission by the CVT could be improved relative to the more conventional design thereof of figure 2 including only transverse members 30 of substantially identical width.

One aspect of the known design of the transverse members 30 according to figure 3 is that both the both wider transverse members 30-I and the narrower transverse members 30-II define recesses 39, that respectively open to the respective axial sides of the transverse members 30. The endless carriers 31 are contained in these recesses 39 in radial outward direction and in radial inward direction by respective head parts 41, located radially outward of the carriers 31, and respective body parts 42, located radially inside the carriers 31, of the transverse members 30.

According to the present disclosure, such feature of the radial containment of the endless carriers 31 by the transverse members 30 of both types 30-I, 30-II was found to be not essential. This finding enables the further improvement of the known drive belt 3 by further reducing the size and mass of the narrower transverse members 30-II thereof.

In figure 4 a first embodiment of such novel, improved drive belt 3 is illustrated. In this first embodiment of the drive belt 3 the narrower transverse members 30-II are provided with an predominantly rectangular shape and extends in width direction only in between the endless carriers 31 of the drive belt 3. Thus, the side faces 35 of the narrower transverse members 30-II are separated by a distance that corresponds to a width of a central part of the wider transverse members 30-I only, which central part is provided between and interconnects the said head parts 41 and the said body parts 42 thereof.

The narrower transverse member 30-II of figure 4 is shown in front and side elevation in figure 5. It can be seen that this embodiment narrower transverse member 30-II includes the rocking edge 34 and the stud 36 and the hole 38 that are also included in the wider transverse member 30-I. However, this narrower transverse member 30-II does not define a carrier receiving recess. Thus, at the location of the narrower transverse members 30-II, the endless carriers 31 are neither constraint in radial outward direction nor in radial inward direction. Hereby, friction between the endless carriers 31 and the narrower transverse member 30-II is largely eliminated.

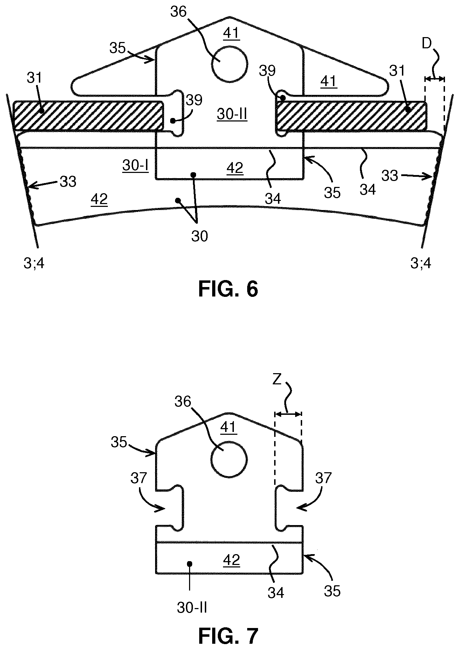

In figure 6 a second embodiment of the novel, improved drive belt 3 is illustrated. In this second embodiment of the drive belt 3, the narrower transverse members 30-II are a little, but not much, wider than the width of the said central part of the wider transverse members 30-I. In this case, the narrower transverse members 30-II are provided with the carrier receiving recesses 37 on either axial side thereof, however, to a limited extend only. In this latter design, the narrower transverse members 30-II remain in interaction with the axial sides of the endless carriers 31, such that -in particular- an unfavourable rotation around its stud 36 and relative to the wider transverse members 30-I is limited. Preferably, however, the axial extend of the carrier receiving recesses 37 of the narrower transverse members 30-II remains small, in order to limit the said friction between these narrower transverse member 30-II and the endless carriers 31 as much as possible. In this latter respect, an axial extend or width Z of the carrier receiving recesses 37 of the narrower transverse members 30-II (see figure 7) preferably corresponds to between 1 and 5 and preferably to between 1.5 and 2.5 times a difference D in a width of the endless carriers 31 and an width of the carrier receiving recesses 39 of the wider transverse members 30-I (see figure 6). The said difference D thus amounts to a clearance in axial direction of the endless carriers 31 between the said central part of the wider transverse members 30-I and a pulley disc 3, 4. Otherwise, i.e. if the said axial extend or width Z of the carrier receiving recesses 37 of the narrower transverse members 30-II would be smaller than the said difference D in a width of the endless carriers 31 and an width of the carrier receiving recesses 39 of the wider transverse members 30-I, an axial side face of the endless carriers 31 could potentially be damaged by a corresponding side face 35 of the narrower transverse members 30-II.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features. The claimed features can be applied separately in a given product or a given process, as the case may be, but it is also possible to apply any combination of two or more of such features therein.

The invention(s) represented by the present disclosure is (are) not limited to the embodiments and/or the examples that are explicitly mentioned herein, but also encompasses amendments, modifications and practical applications thereof, in particular those that lie within reach of the person skilled in the relevant art.

## Claims

1. Drive belt (3) with two endless carriers (31) and with a number of transverse members (30) mounted slideably on the carriers (31), which transverse members (30) are each provided with two main body surfaces where between the transverse member (30) extends in thickness direction and with a central part that is located in between the two endless carriers (31), of which transverse members (30) at least two types (I, II) are included in the drive belt (3) with a largest axial dimension, i.e. width (W_{I}) of a first type (30-I) of the transverse members (30) is larger than a largest axial dimension, i.e. width (W_{II}) of a second type (30-II) of the transverse members (30), **characterised in that** the largest width (W_{II}) ) of the second type transverse members (30-II) is smaller than or at most approximately equal to an axial dimension of the central part of the first type transverse members (30-I).

2. Drive belt (3) with two endless carriers (31) and with a number of transverse members (30) mounted slideably on the carriers (31), which transverse members (30) are each provided with two main body surfaces where between the transverse member (30) extends in thickness direction and with a central part that is located in between the two endless carriers (31) and to either axial side whereof the transverse member (30) is provided with a respective recess (37; 39) defined in radial direction between a head part (41) and a body part (42) of the transverse member (30) for at least partly receiving a respective one of the two endless carriers (31), of which transverse members (30) at least two types (I, II) are included in the drive belt (3) with a largest axial dimension, i.e. width (W_{I}) of a first type (30-I) of the transverse members (30) is larger than a largest axial dimension, i.e. width (W_{II}) of a second type (30-II) of the transverse members (30), **characterised in that** a dimension (Z) in axial direction of the recesses (37) of the second type transverse members (30-II) amounts to at least 1 times and at most 5 times, preferably between 1.5 and 2.5 times, a clearance (D) in axial direction between the endless carriers (31) and the said central part the first type transverse members (30-II).

## Patentansprüche

1. Antriebsriemen (3) mit zwei Endlosträgern (31) und mit mehreren Querelementen (30), die verschiebbar auf den Trägern (31) angebracht sind, wobei die Querelemente (30) jeweils mit zwei Hauptkörperflächen, wozwischen sich das Querelement (30) in Dickenrichtung erstreckt, und mit einem mittleren Teil, der sich zwischen den beiden Endlosträgern (31) befindet, versehen sind, wobei von den Querelementen (30) mindestens zwei Arten (I, II) im Antriebsriemen (3) enthalten sind, wobei eine größte Axialabmessung, das heißt Breite (W_{I}), einer ersten Art (30-I) der Querelemente (30) größer als eine größte Axialabmessung, das heißt Breite (W_{II}), einer zweiten Art (30-II) der Querelemente (30) ist, **dadurch gekennzeichnet, dass** die größte Breite (W_{II}) der Querelemente (30-II) der zweiten Art kleiner als eine oder höchstens ungefähr gleich einer Axialabmessung des mittleren Teils der Querelemente (30-I) der ersten Art ist.

2. Antriebsriemen (3) mit zwei Endlosträgern (31) und mit mehreren Querelementen (30), die verschiebbar auf den Trägern (31) angebracht sind, wobei die Querelemente (30) jeweils mit zwei Hauptkörperflächen, wozwischen sich das Querelement (30) in Dickenrichtung erstreckt, und mit einem mittleren Teil versehen sind, der sich zwischen den beiden Endlosträgern (31) befindet und auf dessen beiden axialen Seiten das Querelement (30) mit einer jeweiligen Aussparung (37; 39) versehen ist, die in Radialrichtung zwischen einem Kopfteil (41) und einem Körperteil (42) des Querelements (30) zur zumindest teilweisen Aufnahme eines jeweiligen der beiden Endlosträger (31) definiert wird, wobei von den Querelementen (30) mindestens zwei Arten (I, II) im Antriebsriemen (3) enthalten sind, wobei eine größte Axialabmessung, das heißt Breite (W_{I}), einer ersten Art (30-I) der Querelemente (30) größer als eine größte Axialabmessung, das heißt Breite (W_{II}), einer zweiten Art (30-II) der Querelemente (30) ist, **dadurch gekennzeichnet, dass** sich eine Abmessung (Z) in Axialrichtung der Aussparungen (37) der Querelemente (30-II) der zweiten Art auf mindestens das 1-Fache und höchstens das 5-Fache, vorzugsweise auf zwischen das 1,5- und 2,5-Fache, eines Zwischenraums (D) in Axialrichtung zwischen den Endlosträgern (31) und dem mittleren Teil der Querelemente (30-II) der ersten Art beläuft.

## Revendications

1. Courroie d'entraînement (3) comportant deux supports sans fin (31) et comportant un certain nombre d'éléments transversaux (30) installés à coulissement sur les supports (31), lesdits éléments transversaux (30) étant chacun pourvus de deux surfaces de corps principal entre lesquelles s'étend l'élément transversal (30) dans une direction d'épaisseur et d'une partie centrale qui est située entre les deux supports sans fin (31), au moins deux types (I, II) desdits éléments transversaux (30) étant inclus dans la courroie d'entraînement (3), une dimension axiale maximale, c'est-à-dire une largeur (W_{I}), d'un premier type (30-I) des éléments transversaux (30) étant supérieure à une dimension axiale maximale, c'est-à-dire une largeur (W_{II}), d'un second type (30-II) des éléments transversaux (30), **caractérisée en ce que** la largeur maximale (W_{II}) des éléments transversaux du second type (30-II) est inférieure ou au plus approximativement égale à une dimension axiale de la partie centrale des éléments transversaux du premier type (30-I).

2. Courroie d'entraînement (3) comportant deux supports sans fin (31) et comportant un certain nombre d'éléments transversaux (30) installés à coulissement sur les supports (31), lesdits éléments transversaux (30) étant chacun pourvus de deux surfaces de corps principal entre lesquelles s'étend l'élément transversal (30) dans une direction d'épaisseur et d'une partie centrale qui est située entre les deux supports sans fin (31) et de chaque côté axial de laquelle l'élément transversal (30) est pourvu d'un évidement (37 ; 39) respectif défini dans la direction radiale entre une partie tête (41) et une partie corps (42) de l'élément transversal (30) et destiné à recevoir au moins partiellement un support respectif parmi les deux supports sans fin (31), au moins deux types (I, II) desdits éléments transversaux (30) étant inclus dans la courroie d'entraînement (3), une dimension axiale maximale, c'est-à-dire une largeur (W_{I}), d'un premier type (30-I) des éléments transversaux (30) étant supérieure à une dimension axiale maximale, c'est-à-dire une largeur (W_{II}), d'un second type (30-II) des éléments transversaux (30), **caractérisée en ce qu'**une dimension (Z) dans la direction axiale des évidements (37) des éléments transversaux du second type (30-II) a une valeur égale à au moins 1 fois et au plus 5 fois, de préférence a une valeur comprise entre 1,5 fois et 2,5 fois, un jeu (D) dans la direction axiale entre les supports sans fin (31) et ladite partie centrale des éléments transversaux du premier type (30-II).
